# EUROPEAN PATENT APPLICATION

(11) **EP 4 502 368 A1**
(43) Date of publication of application: **05.02.2025**
(21) Application number: 23189137.5
(22) Date of filing: 02.08.2023
(51) Int. Cl.: F03D 15/10, F03D 80/50

(54) **HANDLING APPARATUS**

(71) Applicant: Siemens Gamesa Renewable Energy A/S, 7330 Brande (DK)
(72) Inventor: Rogg, Andreas, 22605 Hamburg (DE)
(74) Representative: SGRE-Association

(57) **Abstract**

The invention describes a handling apparatus (1) for use in a maintenance procedure of a wind turbine drivetrain (2, 4, 6) comprising a planetary gearbox (4) and a generator (6) coaxially mounted to the gearbox (4), which handling apparatus (1) comprises a suspension rail (10) dimensioned to extend from the interior of the generator rotor (64) outward to the exterior of the generator (6); a mounting means (100, 10F, 10B) for mounting the rail (10) to a stationary drivetrain part (42, 62, 64); at least one carriage (12) arranged to move along the underside of the suspension rail (10); and at least one lifting fitting (14, 140, 142) adapted for attachment to a drivetrain component (66, 68, 8, 44) and comprising a means of suspending that lifting fitting (14, 140, 142) from a carriage (12). The invention further describes a method of performing a maintenance procedure on a wind turbine drivetrain (2, 4, 6) using such a handling apparatus (1).

## Description

### Background

The drivetrain of a wind turbine can comprise a low-speed shaft turned by the aerodynamic rotor, a gearbox with a high-speed output shaft, and a generator connected to the high-speed shaft. In a known type of medium-speed powertrain, the gearbox is a multistage planetary gearbox, and the generator is coaxially mounted to the gearbox. In such a realization, the low-speed shaft, the planetary gearbox sun shaft and the generator rotor essentially share a common axis of rotation. Since the low-speed shaft and the gearbox sun shafts can be hollow, the coaxial alignment of the drivetrain components can be exploited by arranging a hollow tube in the interior spaces of the low-speed shaft, gearbox and generator, and using this hollow tube as a cable conduit for electrical cables to the hub, for example cables from a wind turbine controller to the pitch systems of the rotor blades.

Instead of securing the generator housing to a bedplate or other fixed structure, the generator housing is attached in cantilever fashion to the gearbox housing. In such a construction, a bearing assembly that primarily serves to support the gearbox output shaft may also be used to centre and support the generator rotor. This bearing assembly or "gearbox-generator bearing", which can for example comprise a pair of tapered roller bearings, is usually realised in the form of a cartridge that can be handled as a single unit.

Since an internal component of such a gearbox/generator assembly may require maintenance at some stage in the lifetime of the wind turbine, the drivetrain may be designed so that such a component can be extracted to the rear of the generator without requiring complete disassembly of the generator or the generator rotor. However, in order to access a component of the gearbox, it may be necessary to remove the gearbox-generator bearing assembly, even if the bearing assembly itself is not in need of maintenance. Since the mass of such a gearbox/generator bearing assembly can be in the order of 1,000 kg, specialized equipment is required for its removal.

It is usual to equip a wind turbine with a nacelle crane in the interior of the nacelle, to assist in passing equipment, tools and components into or out of the nacelle. However, a nacelle crane is generally not placed to access a component in the interior of the generator, and therefore cannot directly assist in removal of a component from within the generator.

Therefore, a dedicated tool is generally required for a procedure to remove a component from within the generator. For example, a suitably robust support structure can be arranged on a bedplate of the nacelle, and may comprise a framework of robust beams with which a component such as the bearing cartridge can be supported during removal to the exterior of the generator. However, the expense of permanently or temporarily equipping a wind turbine with such a rarely required structure can be prohibitive.

In another approach, after removing a rear cover of the generator, a temporary support tube is mounted coaxially to the generator shaft, and is dimensioned so that an annular component of the drivetrain can slide along the temporary support tube for removal. A drawback of this approach is the complexity of the tools required to install the temporary structure, and the relatively large amount of space required to manipulate the various components. A further disadvantage of this approach is that, if a cable conduit is incorporated in the drivetrain design, it would need to be extracted first to facilitate installation of the temporary support tube, but this preliminary step is difficult and time-consuming.

It is therefore an object of the invention to provide a more straightforward and economical way of removing a component from the interior of such a drivetrain for a maintenance procedure.

This object is achieved by the claimed handling apparatus and by the claimed method of performing a maintenance procedure on a wind turbine drivetrain.

### Description

In the context of the invention, the drivetrain can be assumed to comprise a low-speed shaft which is turned by the aerodynamic rotor of a wind turbine; a planetary gearbox for converting rotation of the low-speed shaft to rotation of a high-speed gearbox output shaft; and a generator mounted coaxially to the planetary gearbox by means of a bearing assembly. In an exemplary construction, the entire drivetrain can have a length in the order of 9 m, the diameter of the generator can be in the order of 3 m, and the bearing assembly (referred to herein as a "bearing cartridge" or simply "bearing") between gearbox and generator can have a mass in the order of 1 metric tonne.

Using a common convention, a front end of any wind turbine drivetrain component can be referred to as its "drive end" or "upwind end"; the rear end of a wind turbine drivetrain component can be referred to as its "non-drive end" or "downwind end". The generator rotor can have an essentially cylindrical or barrel shape, and may be closed at its drive end and open at its non-drive end. In a configuration with rotary field and stationary armature, the generator rotor can carry an arrangement of magnets about its outer annular surface, and a corresponding arrangement of windings can be arranged about the inner annular surface of the generator housing.

According to the invention, the handling apparatus for use in a maintenance procedure of such a wind turbine drivetrain comprises an inverted rail dimensioned to extend from the interior of the generator rotor outward to the exterior of the generator; a mounting means for mounting the inverted rail to an appropriate part of the drivetrain; at least one carriage arranged to slide along the underside of the inverted rail; and at least one lifting fitting adapted for attachment to a drivetrain component and comprising a means of suspending that lifting fitting from a carriage.

The inverted rail of the handling apparatus can comprise a beam made of structural steel, shaped to guide a carriage, for example with an I-shape or C-shape in cross-section. It shall be assumed that the inverted rail is arranged at the "12 o'clock" position inside the rotor barrel. Instead of a single beam carrying the suspended carriage, the inverted rail can be realised using parallel beams arranged essentially symmetrically about the 12 o'clock position, with the carriage supported by the beams. The rail or track is "inverted" in the sense that a suspended carriage is free to move along its underside, and the terms "inverted rail" and "suspension rail" may be used interchangeably herein. Similarly, the terms "rail" and "track" may be used interchangeably.

An advantage of the inventive handling apparatus is that it exploits the drivetrain construction to transfer loads during a disassembly or assembly procedure, and does not require an unwieldy and cumbersome framework. The inventive handling apparatus can be brought with relatively little effort into the nacelle of a wind turbine. Equally, the inventive handling apparatus can be connected quickly and with relatively little effort to the generator, so that the duration of a maintenance procedure can be favourably short. With the inventive handling apparatus in place, various components of the drivetrain can be detached and removed in sequence, allowing these to be lifted safely and securely out through the interior of the generator in a disassembly procedure. Equally, these components can be lifted safely into the interior of the generator in an assembly procedure.

Since the inventive handling apparatus facilitates a maintenance procedure by providing a means of safely lifting heavy components out of or into the generator, the expressions "handling apparatus", "maintenance tool" and "lifting tool" may be used interchangeably in the following.

According to the invention, in addition to the components mentioned above, the wind turbine drivetrain comprises a mounting means adapted to secure the inverted rail of an instance of the inventive maintenance tool to a stationary part of the drivetrain, for example to the generator housing, to the gearbox housing, to the temporarily locked generator rotor, etc.

According to the invention, the method of performing a maintenance procedure on such a wind turbine drivetrain comprises the steps of: removing a rear cover from the generator; using the mounting means to secure the inverted rail of the inventive handling apparatus to a stationary part of the drivetrain; arranging a carriage to slide along the underside of the inverted rail; and suspending a lifting fitting from the carriage. Subsequently, the lifting fitting is connected to a drivetrain component, the drivetrain component is released from any further upwind structure, and removed through the non-drive end of the generator.

Of course, the inventive method shall be assumed to include steps of re-installing one or more drivetrain components by carrying out the above procedure in reverse.

Particularly advantageous embodiments and features of the invention are given by the dependent claims, as revealed in the following description. Features of different claim categories may be combined as appropriate to give further embodiments not described herein.

In the following, it may be assumed that the generator comprises a rotor locking means to temporarily lock the position of the rotor prior to carrying out a maintenance procedure. For example, the generator and gearbox can be designed so that one or more threaded fasteners can be inserted via through-holes in the drive end of the generator rotor into threaded holes formed in a stationary part, for example the non-drive end of the gearbox, the temporarily locked generator rotor, the generator housing, etc. A threaded fastener, for example a double-end stud bolt, can be screwed into a threaded hole or bushing and tightened by a nut placed over its free end (which extends into the generator rotor interior).

In the following, without restricting the invention in any way, it may be assumed that the generator is mounted to the gearbox in cantilever fashion, and is shaped to fit about the output shaft of the gearbox; and a bearing assembly is arranged between gearbox housing and/ or generator housing, with a rotary bearing part arranged to connect the gearbox output shaft and the generator rotor, with a stationary bearing part secured to a stationary gearbox housing or generator housing. The generator may comprise an annular torque transfer sleeve (or "torque support bushing") arranged to connect the gearbox output shaft to the rotating part of the bearing. The generator may further comprise a brake disk. Any one of the above-mentioned parts - brake disk, torque support bushing, bearing assembly and gearbox output shaft - may be detached and removed from within the generator interior using the inventive handling apparatus.

In the following, without restricting the invention in any way, it may be assumed that the length of the suspension rail exceeds the axial length of the generator rotor by at least 200%, more preferably by at least 250%. The length of the inverted rail is preferably chosen so that the longest component (e.g. the gearbox output shaft) can be completely removed from the generator interior while suspended from the inverted rail. This ensures that technicians have sufficient room to safely manipulate the heavy drivetrain component(s) during disassembly and assembly procedures.

The inverted rail of the maintenance tool can be mounted or attached to the stationary drivetrain component in any suitable manner. In a particularly preferred embodiment of the invention, a portion of an upper surface of the inverted rail is shaped to fit against the cylindrical interior surface of the (temporarily stationary) generator rotor barrel, for example that upper surface of the inverted rail can have a curvature to match the curvature of the rotor barrel's interior. Alternatively or in addition, the inverted rail can be connected to a drive-end disc of an annular rotor support structure.

In a further preferred embodiment of the invention, an aperture is provided in an annular rotor support structure to facilitate connection of the front end of the inverted rail to the drive-end of the generator housing. A similar aperture in the generator housing could be provided to facilitate connection of the front end of the inverted rail to the non-drive end of the gearbox housing. After aligning the rotor aperture with the aperture(s) and temporarily locking the rotor, the rail can be inserted into the rotor barrel and pushed through the aperture(s). The front end of the rail can then be secured to the drive end of the generator housing (in the case of a single aperture in the rotor support structure), or to the non-drive end of the gearbox housing (in the case of matching apertures in the rotor support structure and generator housing).

In a preferred embodiment of the invention, the rotor locking means is realised so that, when the rotor is locked in place, an axial threaded hole formed in the rotor drive-end face aligns with a matching axial through-hole in the "upwind" end face of the suspension rail (here, the term "axial" is to be understood as parallel to the rotation axis of the drivetrain). Preferably, several such hole pairs are provided so that the end face of the rail can be secured to the drive-end face of the generator rotor using several fasteners.

The remainder of the suspension rail, which extends some distance beyond the non-drive end of the generator, can be secured in any suitable manner. For example, the weight of the rail (as well as any carriage and load) can also be carried by a suitable cable arrangement or tension rod suspended from a fixed structure such as a drivetrain housing, a nacelle structure, etc., placed so as to allow free operation of a nacelle crane.

Alternatively or in addition, a bracket extending upwards from the rail can be secured to the upper rim of the generator housing (at the "12 o'clock" position) using a suitable number of fasteners. Such fasteners can be inserted through holes that are otherwise used to secure a cover to the non-drive end of the generator housing. Alternatively or in addition, the bracket can terminate in a wide flange, shaped to fit about the curved upper rim of the generator housing. The inverted rail could also comprise means for connecting with lifting lugs already present on the generator housing, and/or with any other feature of a drivetrain housing that has sufficient strength.

As indicated above, the maintenance tool can be used in the removal of various different components through the non-drive end of the generator. For example, in order to access the gearbox output shaft from the non-drive end of the generator, it may be necessary to first remove various other components such as the brake disk of the rotor, the bearing assembly, etc. Therefore, in a preferred embodiment of the invention, the lifting tool comprises various dedicated lifting fittings. Each lifting fitting can be adapted for attachment to a specific drivetrain component, and can be suspended from a carriage using a suitable arrangement of cables, wires or chains. For example, a dedicated lifting fitting can be provided for attaching to any of the rotor brake disk, a torque support bushing, the bearing cartridge, the gearbox output shaft, a cable conduit, etc. Of course, a lifting fitting can be designed for attachment to two or more of these components. In a preferred embodiment of the invention, a component in the interior of the generator is provided with at least one load attachment point so that it can be connected to a lifting fitting of the maintenance tool. For example, a load attachment point can be a threaded hole to receive an eyebolt, so that a cable can be connected between the eye bolt and the carriage of the maintenance tool.

In a further preferred embodiment of the invention, each lifting fitting can be directly or indirectly connected to the hook of the internal nacelle crane by means of a suitable adaptor. When connected to the crane hook, the lifting fitting can be disconnected from the carriage. In this way, a suspended drivetrain component can be safely transferred from the maintenance tool to the internal nacelle crane for a subsequent handling stage.

During a disassembly stage, a component is suspended from the carriage using a suitable lifting fitting, and the component can then be moved out of the generator by laterally displacing the carriage along the inverted rail. This can be done in any suitable manner. In a preferred embodiment of the invention, the carriage is displaced by means of a belt drive, a chain drive or similar. For example, the carriage may be connected between two ends of a chain that is pulled (forwards or backwards) by a motor-driven cog. In this way, the carriage can be displaced smoothly and by a desired amount, so that a suspended heavy component can be moved out of or into the generator interior in a favourably controlled manner. Any suitable drive arrangement, for example a motor-driven spindle, can be used to displace the carriage along the inverted rail.

The gearbox/generator bearing assembly can be removed by securing two or more cables between a lifting fitting and a carriage. A lifting fitting for the bearing assembly can be an annular part that fits about the bearing cartridge.

To suspend the lifting fitting from a carriage, it may be provided with a linear arrangement of two or more robust eyebolts. Alternatively, the bearing cartridge can be adapted to receive threaded shafts of two or more eyebolts, and these eyebolts - collectively serving as a lifting fitting - can be directly connected to wires for suspending from the carriage.

As mentioned above, the drivetrain can be designed to accommodate a cable conduit extending through the low-speed shaft, through the sun shafts of the planetary gearbox and through the gearbox output shaft. The cylindrical hollow cable conduit rotates within the gearbox sun shafts at the same speed as the low-speed main shaft of the drivetrain, and it is important to avoid bending or otherwise damaging the cable conduit when the gearbox output shaft is being removed from the drivetrain. In a preferred embodiment of the invention, after using a first lifting fitting suspended from a carriage to partially withdraw the gearbox output shaft, a second lifting fitting is put into place about the exposed portion of the cable conduit, and suspended from a second, separate carriage. The gearbox output shaft can then be completely removed. This arrangement of second lifting fitting and second carriage can remain in place to support the exposed end of the cable conduit (preventing it from bending under its own weight) until the gearbox output shaft is re-installed.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a cross-section through a wind turbine drivetrain;
Figure 2 shows a cross-section through an embodiment of a gearbox/generator assembly of such a drivetrain;
Figure 3 shows the generator and gearbox of Figure 2 and an embodiment of the inventive handling apparatus;
Figure 4 shows installation of an embodiment of the inventive handling apparatus;
Figure 5 shows a perspective view of an embodiment of the inventive handling apparatus;
Figures 6 - 10 show exemplary stages of a disassembly procedure using the inventive handling apparatus.

In the diagrams, like numbers refer to like objects throughout. Objects in the diagrams are not necessarily drawn to scale.

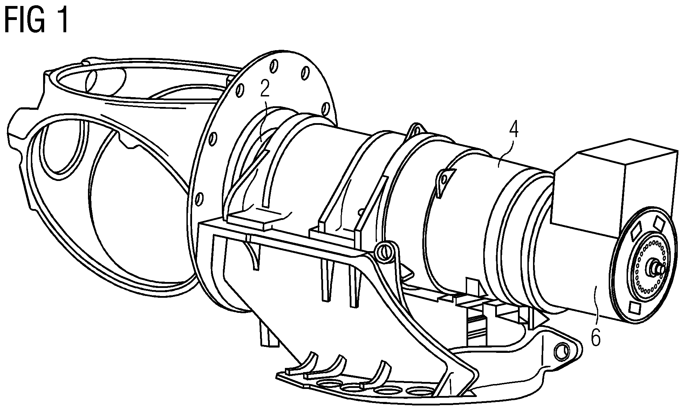

Figure 1 shows relevant components 2, 4, 6 of a wind turbine drivetrain. These are a low-speed shaft 2, which is turned by the aerodynamic rotor (the diagram shows a hub structure shaped for connection to three rotor blades) during operation of the wind turbine; a planetary gearbox 4 with several stages; and a generator 6 mounted coaxially about an output shaft extending from the gearbox final stage. The low speed-shaft (with its bearings and housing) and the gearbox are connected to a bedplate, and the generator is mounted to the gearbox in cantilever fashion and therefore extends freely beyond the non-drive end of the gearbox.

The present invention deals with the aspect of accessing various components of the gearbox/generator assembly. For example, it may be necessary at some point to access the gearbox output shaft. Since it is generally not possible to simply remove the generator from the gearbox, access to the gearbox output shaft or a similar component must be through the interior of the generator 6, and involves successive removal of various parts until the gearbox output shaft can be released and removed. As indicated above, these components of a generator are heavy and unwieldy, and require specialized equipment in order to handle them safely. In a known approach, handling equipment comprises a support structure which is installed for connection to the bedplate. The handling equipment must be constructed to reach around the generator housing so that it can be used to access a component in the interior of the generator. The installation of this type of handling equipment is time-intensive and therefore also costly. Since the handling equipment takes up much of the available space on either side of the generator, the maintenance task is also made more hazardous for service personnel.

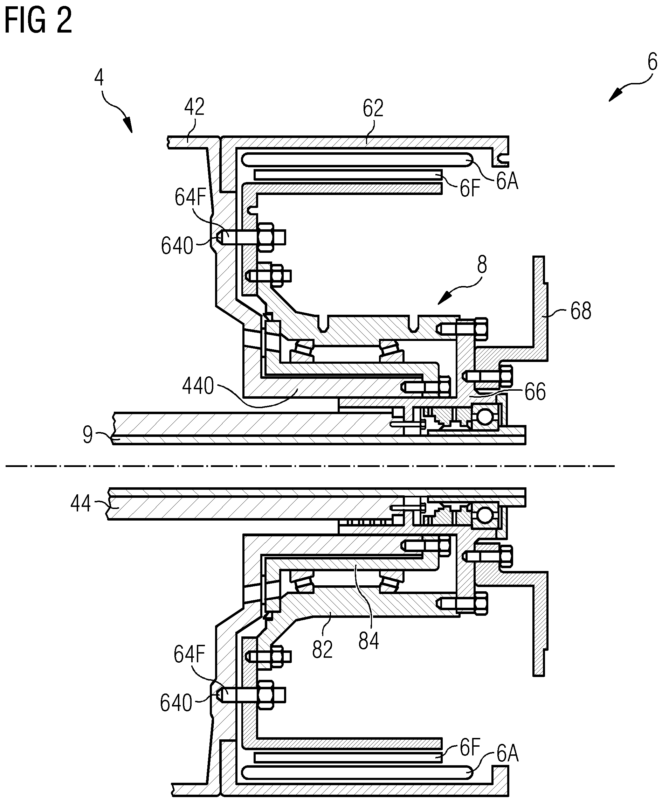

Figure 2 is a simplified cross-section through an embodiment of a gearbox/generator assembly of such a drivetrain. As indicated in the diagram, the stationary generator housing 62 is mounted to the stationary gearbox housing 42 in cantilever fashion. In a preparatory step, the generator rotor 64 is temporarily secured to the gearbox housing 64 by means of one or more fasteners 64F screwed into matching threaded holes 420 at the non-drive end of the gearbox housing 42 as indicated here, so that the generator rotor 64 becomes a stationary drivetrain component until once again released. This step is necessary to hold any rotatable components 64, 82, 66 stationary during a disassembly or assembly procedure.

The drawing shows relevant parts of the generator 6 and gearbox 4 that can be detached and removed. In this exemplary embodiment, the gearbox output shaft 44 is connected (via spline connection) to a torque support bushing 66, which in turn is secured to the outer part 82 of the bearing assembly 8, which in turn is secured to the drive-end face of the generator rotor 64. The non-rotating inner part 84 of the bearing assembly 8 is mounted about a cylindrical sleeve 440 protruding axially from the gearbox housing 42.

One of the advantages of this type of cantilever gearbox/generator assembly is that the bearing assembly 8 can be supplied with lubricant from a gearbox lubrication system, so that the generator 6 does not need a lubrication system of its own (various passages of a lubrication circuit are indicated in the diagram).

In a common realization, the generator rotor 64 carries the field 6F (an arrangement of magnets), and the housing 62 carries the armature 6A (an arrangement of windings). The diagram also shows a brake disk 68 at the downwind or non-drive end of the generator 6.

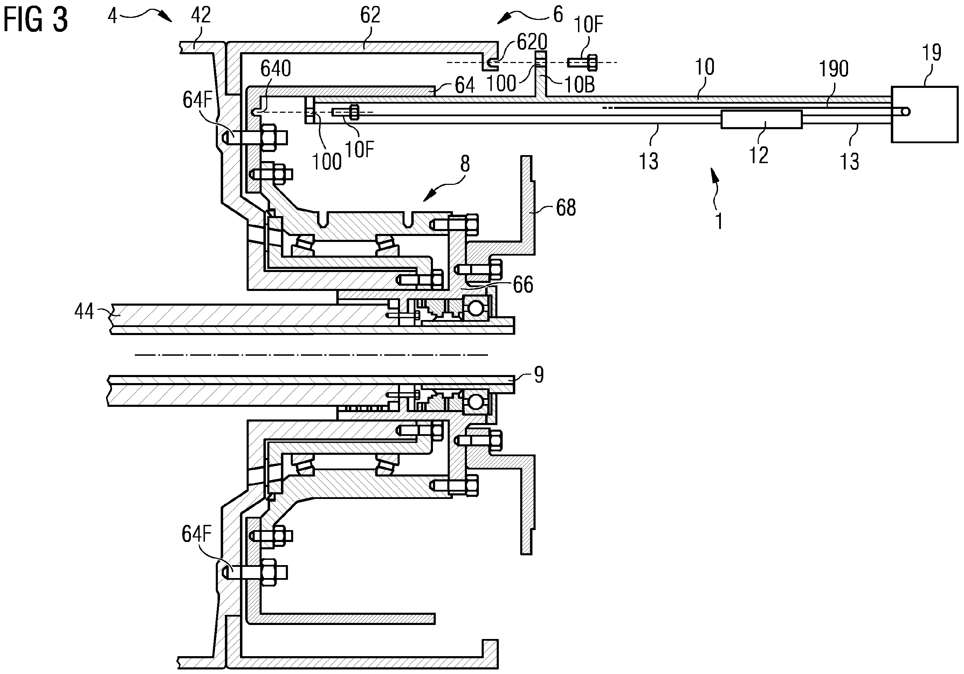

Figure 3 shows the generator 6 and gearbox 4 of Figure 2 and an embodiment of the inventive handling apparatus 1 being brought into position for attachment to stationary drivetrain components. The diagram shows the inverted rail 10 and carriage 12 of the handling apparatus 1. The inverted rail 10 is to be mounted to the locked rotor 64 and the stationary housing 62 of the generator 6. The diagram shows one of several sets of through-holes 100, 640 and a fastener 10F that will be used to secure the "upwind end" of the rail 10 to the drive end of the generator 6. The other end of the rail can be suspended from a stationary drivetrain structure (without interfering with nacelle crane operation). The diagram also indicates a carriage 12 and a motor-driven chain drive 19 for displacing the carriage 12 along the rail 10 in a later stage. The carriage 12 can be mounted between two ends of a chain 190, which can be turned by a motor-driven cog of the drive unit 19.

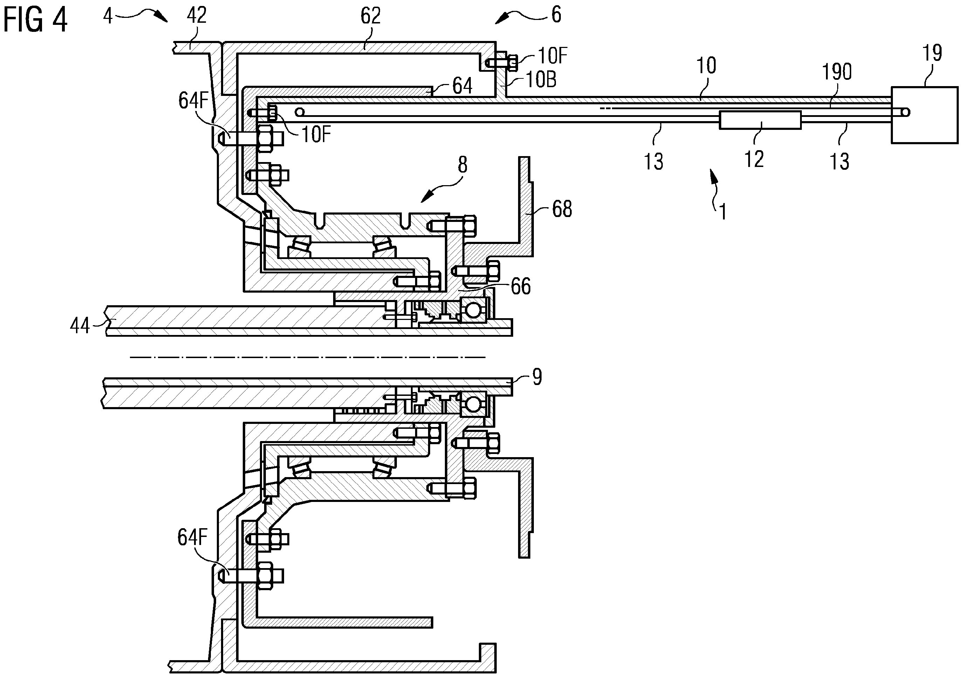

Figure 4 shows the inverted rail 10 of the handling apparatus 1 after mounting at the "12 o'clock" position in the interior of the generator rotor 64. A further connection is made between the generator housing 62 and a bracket 10B extending upwards from the inverted rail 10. Here, a carriage 12 is free to move laterally along the inverted rail 10 as indicated. The carriage 12 can be displaced by the chain drive 19 as explained in Figure 3.

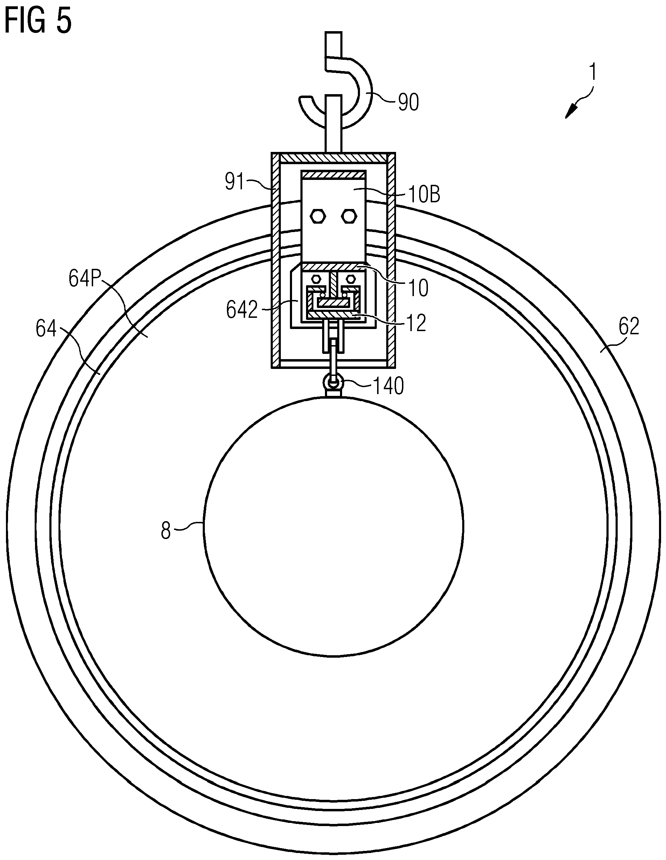

Figure 5 shows an elevation view of an exemplary embodiment of the maintenance tool 1, looking into the interior of the "opened" generator (rear cover and brake disc have been removed). The diagram shows the annular end faces of the generator housing 62 and rotor 64 at the generator's non-drive end 6_{NDE}, and the rotor front plate 64P at the generator's drive end 6_{DE}. The suspension rail 10 of the maintenance tool 1 is connected at the generator's non-drive end 6_{NDE} by means of a bracket 10B on the generator housing 62 as explained above. The rail has an "I" shape and the carriage 12 can slide along the lower part of the rail 10. In this exemplary embodiment, at the generator's drive end 6_{DE}, an aperture 642 in a rotor front plate 64P allows the front end of the rail 10 to be secured to the gearbox housing. The diagram also indicates the bearing assembly 8 (indicated simply by a circle; components such as the gearbox output shaft, torque support sleeve etc., are left out for clarity), suspended from the carriage 12 by means of eyebolts 140 as explained above.

The diagram also indicates a crane hook 90 (of a nacelle crane, not shown), and a lifting structure 91 suspended from the crane hook 90. After moving the bearing cartridge 8 out beyond the non-drive end 6_{NDE} of the generator 6, the bearing 8 can be transferred from the maintenance tool 1 to the lifting structure 91, so that the bearing is then suspended from the nacelle crane hook 90.

Any component removed in this manner from the interior of the generator 6 can then be disconnected from the carriage 10 of the maintenance tool 1, and its weight is carried by the nacelle crane. The maintenance tool 1 can then be used to remove a further component from the generator and/or gearbox, if necessary.

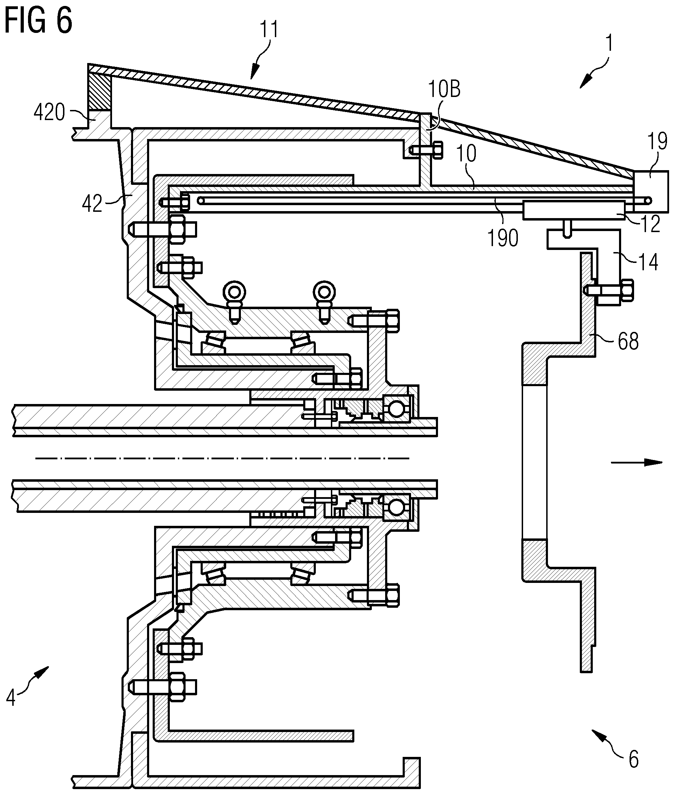

Figures 6 - 10 show exemplary stages of a disassembly procedure. In Figure 6, a lifting fitting 14 is suspended from a carriage 12 and secured to the brake disk 68. The brake disk 68 is then detached from a torque support bushing 66, and moved out of the generator space as shown here. In addition to securing the rail to the generator housing a explained above, this diagram shows an additional connection to a feature 424 of the gearbox housing 42. The diagram also indicates a further support structure 11 which may be deployed to transfer some of the load to the gearbox housing (and from there to the nacelle bedplate). The diagram also shows the rail 10 connected to the non-drive end of the gearbox housing 42, facilitated by the aperture 642 of the embodiment shown in Figure 5.

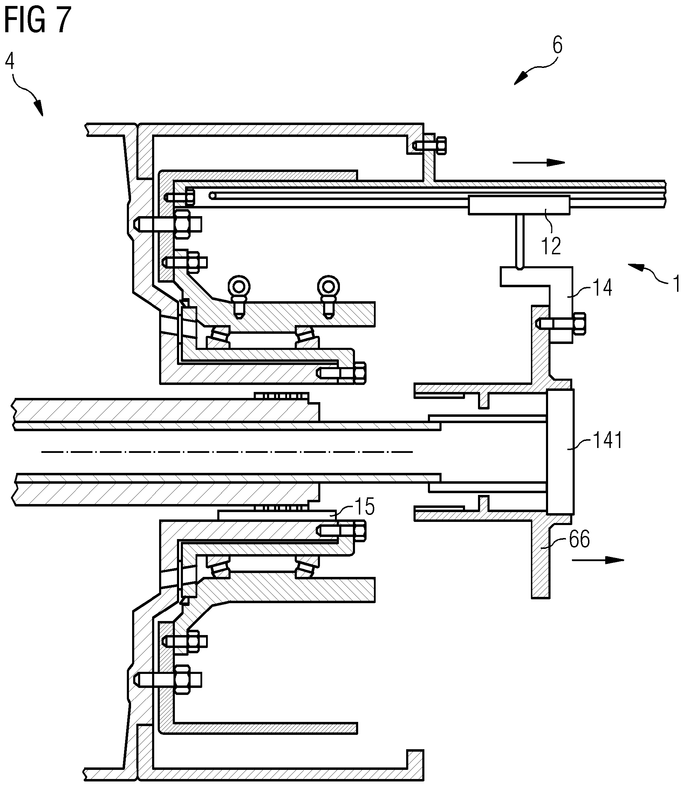

In Figure 7, a lifting fitting 14 is suspended from a carriage 12 and secured to the torque support bushing 66. The torque support bushing 66 is then detached from the gearbox output shaft 44, and moved out of the generator space as shown here. The diagram also shows a further fitting 141 for temporarily supporting the rear end of the cable conduit 7 to provide access to insert a temporary support part 15 used to support the gearbox output shaft 44 after removing the torque support bushing 66.

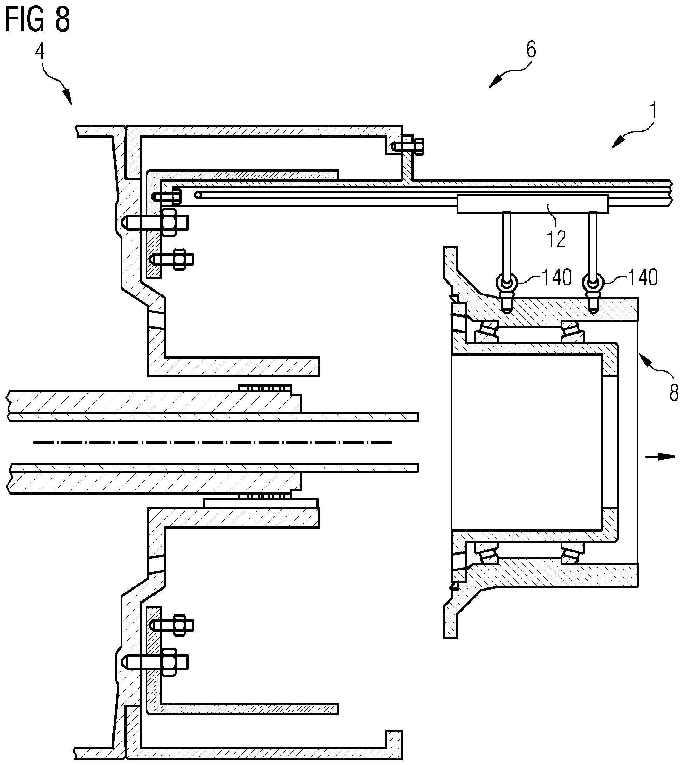

In Figure 8, the bearing cartridge 8 is prepared for removal by screwing eye bolts 140 into threaded holes previously formed in the body of the bearing housing (the threaded holes are placed so that these face upwards when the rotor is in its "locked" or "12 o'clock" position). These eye bolts 140 collectively act as a lifting fitting and are secured to a carriage 12 by suitably robust wires. The bearing cartridge 8 is then detached from the gearbox output shaft 44 and the generator rotor 64, and moved out of the generator space as shown here.

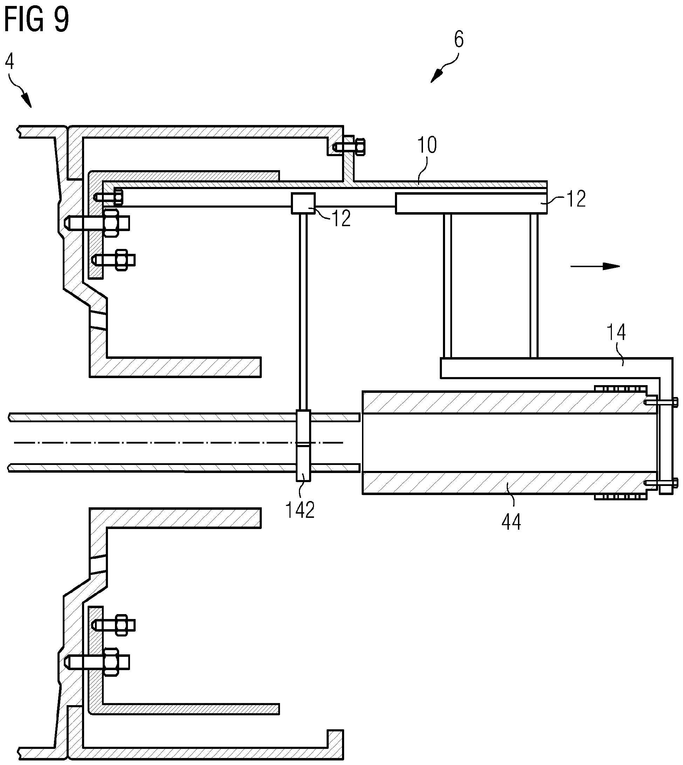

In Figure 9, a lifting fitting 14 is suspended from a carriage 12 and secured to the gearbox output shaft 44, which has been detached from the gearbox. As the gearbox output shaft 44 is removed as indicated, a further lifting fitting 142 (suspended from a separate carriage 12) is secured to the cable conduit 7 to hold this in place.

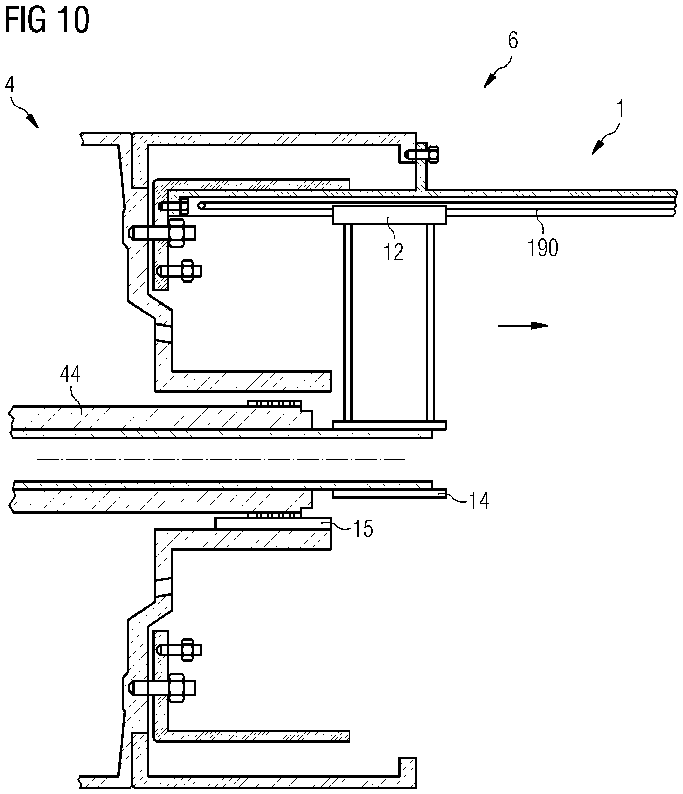

In an alternative step, the gearbox output shaft 44 can be left in place and the cable conduit 7 can be removed. Figure 10 shows an annular lifting fitting 14 in place about the cable conduit 7, and suspended from a carriage 12 of the handling apparatus 1. The gearbox output shaft is supported by the temporary support part 15. The cable conduit 7 can then be withdrawn from the interior of the gearbox output shaft 44 as shown here.

An assembly procedure can be performed by carrying out, in reverse order, the steps described above.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A handling apparatus (1) for use in a maintenance procedure of a wind turbine drivetrain (2, 4, 6) comprising a planetary gearbox (4) and a generator (6) coaxially mounted to the gearbox (4), which handling apparatus (1) comprises
- a suspension rail (10) dimensioned to extend from the interior of the generator rotor (64) outward to the exterior of the generator (6);
- a mounting means (100, 10F, 10B) for mounting the rail (10) to a stationary drivetrain part (42, 62, 64);
- at least one carriage (12) arranged to move along the underside of the suspension rail (10); and
- at least one lifting fitting (14, 140, 142) adapted for attachment to a drivetrain component (66, 68, 8, 44) and comprising a means of suspending that lifting fitting (14, 140, 142) from a carriage (12).

2. A handling apparatus according to the preceding claim, wherein a surface of the suspension rail (10) is shaped to fit against the interior surface of the generator rotor (64).

3. A handling apparatus according to any of the preceding claims, wherein the mounting means comprises at least one axial through-hole (100) at an end face of the suspension rail (10) arranged to align with a matching axial threaded hole (420, 640) in stationary drivetrain part (42, 62, 64) and to receive a threaded fastener (64F).

4. A handling apparatus according to any of the preceding claims, wherein the mounting means comprises a bracket (10B) extending upwards from the suspension rail (10) and a means (100, 10F) of securing the bracket (10B) to the generator housing (62) at the non-drive end (6_{NDE}) of the generator (6).

5. A handling apparatus according to any of the preceding claims, comprising a plurality of lifting fittings (14, 140, 142), wherein each lifting fitting (14, 140, 142) is adapted for attachment to a specific drivetrain component (66, 68, 8, 44) .

6. A handling apparatus according to any of the preceding claims, comprising a chain drive (19) arranged to displace the carriage (12).

7. A handling apparatus according to any of the preceding claims, wherein the length (10L) of the suspension rail (10) exceeds the axial length (6L) of the generator (6) by at least 200%, more preferably by at least 250%.

8. A wind turbine drivetrain (2, 4, 6) comprising
- a low-speed shaft (2) adapted to be turned by the aerodynamic rotor of the wind turbine;
- a planetary gearbox (4) for converting rotation of the low-speed shaft (2) to rotation of a high-speed gearbox output shaft (44);
- a generator (6) mounted coaxially to the planetary gearbox (4); and
- a mounting means (100, 101, 10B) adapted to secure the suspension rail (10) of a handling apparatus (1) according to any of claims 1 to 7 to the generator (6).

9. A wind turbine drivetrain according to the preceding claim, wherein the mounting means comprises at least one axial threaded hole (640) in a stationary drivetrain part (42, 62, 64), dimensioned to receive a threaded fastener (10F) and placed to align with a matching axial through-hole (100) at an end face of the suspension rail (10) of the handling apparatus (1).

10. A wind turbine drivetrain according to the preceding claim, wherein the generator (6) comprises a locking means (420, 64F) adapted to secure the generator rotor (64) to the generator housing (62), and wherein the locking means (420, 64F) is realised to align the axial threaded hole (640) to the matching axial through-hole (100) in the end face of the suspension rail (10).

11. A wind turbine drivetrain according to any of claims 8 to 10, wherein the mounting means comprises a generator housing feature adapted to engage with a bracket (10B) extending from the suspension rail (10) of the handling apparatus (1).

12. A wind turbine drivetrain according to any of claims 8 to 11, wherein the bearing (8) comprises at least one threaded hole (80) formed to receive an eye bolt (140) and positioned to lie underneath the suspension rail (10) when the generator rotor (64) is locked to the generator housing (62).

13. A wind turbine drivetrain according to any of claims 8 to 12, comprising an aperture (642) formed in a first stationary drivetrain part (64) to facilitate connection of the suspension rail (10) to a further stationary drivetrain part (42) .

14. A method of performing a maintenance procedure on a wind turbine drivetrain (2, 4, 6) according to any of claims 8 to 13, which method comprises the steps of:
- mounting the suspension rail (10) of a handling apparatus (1) according to any of claims 1 to 7 to a stationary drivetrain part (42, 62, 64);
- suspending a lifting fitting (14, 140) from a carriage (12) arranged on the suspension rail (10);
- connecting the lifting fitting (14, 140) to a drivetrain component (66, 68, 8, 44);
- releasing the drivetrain component (66, 68, 8, 44) and removing the drivetrain component (66, 68, 8, 44) through the non-drive end (6_{NDE}) of the generator (6).

15. A method according to the preceding claim, comprising steps of:
- partially removing the gearbox output shaft (44) using a lifting fitting (14, 140) of the handling apparatus (1);
- attaching a further lifting fitting (142) about the exposed portion of the cable conduit (7) of the drivetrain and suspending that lifting fitting (142) from a further carriage (12); and
- removing the gearbox output shaft (44) through the non-drive end (6_{NDE}) of the generator (6).
